(19) Europäisches Patentamt
European Patent Office
Office européen des brevets

(11) **EP 3 636 708 A1**

(12) **EUROPEAN PATENT APPLICATION**
published in accordance with Art. 153(4) EPC

(43) Date of publication:
**15.04.2020 Bulletin 2020/16**

(21) Application number: **18812821.9**

(22) Date of filing: **28.05.2018**

(51) Int Cl.:
*C08L 21/00* (2006.01)          *B60C 1/00* (2006.01)
*C08K 3/04* (2006.01)          *C08K 3/36* (2006.01)
*C08K 5/053* (2006.01)          *C08K 5/5415* (2006.01)
*C08L 7/00* (2006.01)          *C08L 9/00* (2006.01)

(86) International application number:
**PCT/JP2018/020395**

(87) International publication number:
**WO 2018/225565 (13.12.2018 Gazette 2018/50)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **09.06.2017  JP 2017114427**

(71) Applicant: **Bridgestone Corporation
Tokyo 104-8340 (JP)**

(72) Inventor: **SHODA, Yasuhiro
Tokyo 104-8340 (JP)**

(74) Representative: **Oxley, Robin John George
Marks & Clerk LLP
15 Fetter Lane
London EC4A 1BW (GB)**

(54) **RUBBER COMPOSITION AND TIRE**

(57)    An object of the present invention is to provide a rubber composition from which a tire having high elasticity and excellent elongation fatigue resistance can be obtained.

A rubber composition of the present invention comprises a rubber component (A), a linear polyhydric alcohol (B), and a silica (C), in which the total content of a natural rubber and a synthetic polyisoprene rubber in the rubber component (A) is 30% by mass or more, and the content of the silica (C) is more than 0 parts by mass and less than 10 parts by mass per 100 parts by mass of the rubber component (A).

EP 3 636 708 A1

**Description**

Technical Field

The present invention relates to a rubber composition and a tire.

Background Art

In recent years, attempts have been made to improve properties such as mechanical strength by mixing various additives into a rubber composition.
Patent Literature 1 discloses a rubber composition for a base tread comprising 5 to 200 parts by mass of silica and 0.1 to 40 parts by mass of a cyclized rubber per 100 parts by mass of a rubber component, in which the content of a butadiene rubber in 100% by mass of the rubber component is 10 to 80% by mass, for the purpose of providing a rubber composition for a base tread that improves fuel economy, fracture strength, flex crack resistance, and workability in a balanced manner.

Citation List

Patent Literature

PTL1: JP 2014-15581 A

Summary of the invention

Technical Problem

An object of the present invention is to provide a rubber composition from which a tire having high elasticity and excellent elongation fatigue resistance can be obtained. Further, another object thereof is to provide a tire using the rubber composition.

Solution to Problem

As a result of diligent studies, the present inventors have found that mixing a specific polyhydric alcohol into a rubber composition comprising a specific rubber component and setting the amount of silica that the rubber composition comprises within a specific range can solve the above-mentioned problem.
Specifically, the present invention relates to the following <1> to <12>.

<1> A rubber composition comprising a rubber component (A), a linear polyhydric alcohol (B), and a silica (C), wherein a total content of a natural rubber and a synthetic polyisoprene rubber in the rubber component (A) is 30% by mass or more, and a content of the silica (C) is more than 0 parts by mass and less than 10 parts by mass per 100 parts by mass of the rubber component (A).
<2> The rubber composition according to <1>, wherein the number of hydroxyl groups that the linear polyhydric alcohol (B) has per molecule is more than a half of the number of carbon atoms per molecule.
<3> The rubber composition according to <1> or <2>, wherein the linear polyhydric alcohol (B) has a melting point of 170°C or less.
<4> The rubber composition according to any one of <1> to <3>, wherein the linear polyhydric alcohol (B) has a molecular weight of 200 or less.
<5> The rubber composition according to any one of <1> to <4>, wherein a content of the linear polyhydric alcohol (B) is 1 to 6 parts by mass per 100 parts by mass of the rubber component (A).
<6> The rubber composition according to any one of <1> to <5>, wherein a content of the silica (C) is 1 to 5 parts by mass per 100 parts by mass of the rubber component (A).
<7> The rubber composition according to any one of <1> to <6>, further comprising a carbon black (D), wherein a content of the carbon black (D) is 10 to 80 parts by mass per 100 parts by mass of the rubber component (A).
<8> The rubber composition according to any one of <1> to <7>, wherein a content of a silane coupling agent is 1 part by mass or less per 100 parts by mass of the rubber component (A).
<9> The rubber composition according to any one of <1> to <7> not comprising a silane coupling agent.
<10> The rubber composition according to any one of <1> to <9>, wherein a total content of the natural rubber and the synthetic polyisoprene rubber in the rubber component (A) is 50% by mass or more.

<11> The rubber composition according to any one of <1> to <10>, which is for tire treads.

<12> A tire using the rubber composition of any one of <1> to <11>.

Advantageous Effects of Invention

According to the present invention, a rubber composition from which a tire having high elasticity and excellent elongation fatigue resistance can be obtained can be provided. Further, according to the present invention, a tire using the rubber composition can be provided.

Description of Embodiments

The present invention is illustrated and described in detail based on embodiments thereof hereinunder. In the following description, the wording "A to B" indicating the numerical range represents a numerical range including the end points A and B, that is "A or more and B or less" (when A < B) or "A or less and B or more" (when A > B).

Part by mass and % by mass have the same meaning as part by weight and % by weight, respectively.

[Rubber Composition]

The rubber composition of the present invention comprises a rubber component (A) (hereinafter also referred to as "component (A)"), a linear polyhydric alcohol (B) (hereinafter also referred to as "component (B)"), and a silica (C) (hereinafter also referred to as "component (C)"), in which the total content of a natural rubber and a synthetic polyisoprene rubber in the rubber component (A) is 30% by mass or more, and the content of the silica (C) is more than 0 parts by mass and less than 10 parts by mass per 100 parts by mass of the rubber component (A).

There has been a demand for improvement in elongation fatigue resistance in tires or the like that are repeatedly deformed during operation. An object of the present invention is to provide a crosslinked rubber composition having both improved elongation fatigue resistance and high elasticity.

As a result of diligent studies, the present inventors have found that by setting the content of the silica (C) within a specific range in the rubber composition comprising the natural rubber and the synthetic polyisoprene rubber as the rubber component (A) in a total content of 30% by mass or more, in which a linear polyhydric alcohol (B) is mixed, a crosslinked rubber composition having high elasticity and excellent elongation fatigue resistance can be obtained, thereby completing the present invention. Although the detailed mechanism is unknown, it is partially understood as follows.

That is, it is presumed, although the reason is unknown, that by mixing the linear polyhydric alcohol (B) into the rubber composition, the natural rubber and/or the synthetic polyisoprene rubber in the rubber component (A) and the linear polyhydric alcohol interact with each other, and as a result, the effects of high elasticity and improvement in the elongation fatigue resistance can be obtained. On the other hand, it is presumed that when the content of the silica (C) exceeds a certain range, the interaction between the rubber component and the linear polyhydric alcohol (B) is inhibited, and the effect of improvement in the elongation fatigue resistance cannot be obtained.

The present invention is described in detail hereinunder.

<Rubber Component (A)>

The rubber composition of the present invention comprises a rubber component (A), and the total content of a natural rubber and a synthetic polyisoprene rubber in the rubber component (A) is 30% by mass or more.

Preferred examples of the rubber component are a natural rubber and a synthetic diene rubber. Examples of the synthetic diene rubber include a polyisoprene rubber (synthetic polyisoprene rubber), a polybutadiene rubber (BR), a styrene-butadiene copolymer rubber (SBR), an ethylene-propylene-diene terpolymer rubber, a chloroprene rubber, a butyl rubber, a halogenated butyl rubber, and an acrylonitrile-butadiene rubber. These synthetic diene rubbers may be used singly or in combinations of two or more.

In the rubber component (A) of the present invention, the total content of the natural rubber and the synthetic polyisoprene rubber is 30% by mass or more. It is preferable for the total content of the natural rubber and the synthetic isoprene rubber to be in the above-mentioned range because the effect of improvement in the elongation fatigue resistance is better while maintaining high elasticity due to the addition of the linear polyhydric alcohol (B).

The total content of the natural rubber and the synthetic polyisoprene rubber in the rubber component (A) is preferably 50% by mass or more, more preferably 70% by mass or more, still more preferably 90% by mass or more, and even more preferably 100% by mass from the viewpoint of further improving elongation fatigue resistance.

The rubber component may comprise both the natural rubber and the synthetic polyisoprene rubber, may comprise only one of those, and is not particularly limited, but preferably comprises at least the natural rubber, and more preferably comprises only the natural rubber among the natural rubber and the synthetic polyisoprene rubber.

The rubber component may contain other rubbers other than the natural rubber and the synthetic polyisoprene rubber. The other rubbers may be used singly or in combinations of two or more.

As the other rubbers, SBR and BR are preferable.

A high-cis polybutadiene rubber (BR) is preferable as the polybutadiene rubber from the viewpoint of improving wear resistance. The high-cis polybutadiene rubber refers to a high-cis polybutadiene rubber having a cis-1,4 bond content in a 1,3-butadiene unit of 90% or more and 99% or less as measured by FT-IR. The cis-1,4 bond content in a 1,3-butadiene unit of the high-cis polybutadiene rubber is preferably 95% or more and 99% or less.

The production method of the high-cis polybutadiene rubber is not particularly limited, and the high-cis polybutadiene rubber may be produced by a known method. Examples thereof include a method of polymerizing butadiene using a neodymium catalyst.

Examples of commercially available high-cis polybutadiene rubber include "BR01" and "T700" manufactured by JSR Corporation and "Ubepol BR150L" manufactured by Ube Industries, Ltd.

<Linear Polyhydric Alcohol (B)>

By comprising a polyhydric alcohol (B) including a linear polyhydric alcohol (B) (also simply referred to as "polyhydric alcohol (B)"), the rubber composition of the present invention is improved in elongation fatigue resistance while maintaining high elasticity.

The linear polyhydric alcohol is a compound in which at least two of the hydrogen atoms included in a linear alkane are replaced with hydroxyl groups. Although the polyhydric alcohol (B) preferably has a large number of hydroxyl groups per molecule from the viewpoint of obtaining a crosslinked rubber composition having high elasticity and excellent elongation fatigue resistance, the number of hydroxyl groups per molecule is 2 or more, preferably 3 or more and 10 or less, more preferably 4 or more and 9 or less, and still more preferably 5 or more and 8 or less from the viewpoint of obtaining a desired melting point.

Further, since the linear polyhydric alcohol (B) does not have a cyclic structure, it is possible to improve the elongation fatigue resistance while maintaining high elasticity.

The melting point of the linear polyhydric alcohol (B) is preferably 170°C or less, more preferably 160°C or less, still more preferably 145°C or less, and even more preferably 130°C or less, from the viewpoint of homogeneously dispersing the linear polyhydric alcohol (B) in the rubber component during kneading of the rubber composition.

It is preferable that the number of hydroxyl groups that the linear polyhydric alcohol (B) has per molecule be more than a half of the number of carbon atoms that the linear polyhydric alcohol (B) has per molecule. That is, when the number of hydroxyl groups which the linear polyhydric alcohol (B) has per molecule is $N_{OH}$ and the number of carbon atoms which the linear polyhydric alcohol (B) has per molecule is $N_C$, it is preferable that the following Formula (I) be satisfied:

$$N_{OH} > N_C/2 \qquad (I)$$

This is preferable because when the above Formula (I) is satisfied, a crosslinked rubber composition having high elasticity and excellent elongation fatigue resistance can be obtained, a desired melting point can be easily obtained, and the dispersibility of the linear polyhydric alcohol (B) in the rubber composition is excellent.

$N_{OH}/N_C$ is preferably more than 0.5, more preferably 0.65 or more, still more preferably 0.8 or more, and even more preferably 0.9 or more.

The boiling point of the linear polyhydric alcohol (B) is preferably 160°C or more, more preferably 180°C or more, and still more preferably 200°C or more, from the viewpoint of suppressing volatilization of the linear polyhydric alcohol (B) at the time of kneading and crosslinking of the rubber composition. The upper limit of the boiling point is not particularly limited, but is preferably 500°C or less, and more preferably 400°C or less.

The molecular weight of the linear polyhydric alcohol (B) is preferably 500 or less, more preferably 300 or less, still more preferably 200 or less, and even more preferably 185 or less from the viewpoint of suppressing volatilization of the linear polyhydric alcohol (B) at the time of kneading and crosslinking of the rubber composition, and from the viewpoint of dispersibility in the rubber composition. Further, from the same viewpoint, the molecular weight is preferably 80 or more, more preferably 100 or more, and still more preferably 120 or more.

Examples of the linear polyhydric alcohol (B) include sugar alcohols, and specific examples thereof include tetritols such as erythritol (boiling point = 329 to 331°C, melting point = 121°C, molecular weight = 122) and threitol (boiling point = 330°C, melting point = 88 to 90°C, molecular weight = 122), pentitols such as arabitol (molecular weight = 152), xylitol (boiling point = 216°C, melting point = 92 to 96°C, molecular weight = 152), and ribitol (molecular weight = 152); hexitols such as sorbitol (boiling point = 296°C, melting point = 95°C, molecular weight = 182), mannitol (boiling point = 290 to 295°C, melting point = 166 to 168°C, molecular weight = 182), and galactitol (boiling point: 275 to 280°C, melting point: 98 to 100°C, molecular weight = 182); heptitols such as voremitol (molecular weight = 212); octitols such as D-erythro-D-galactooctitol (molecular weight = 242); nonitols (molecular weight = 272); and decitols (molecular weight = 302).

There is no limitation on the configuration of these sugar alcohols. The configuration of these sugar alcohols may be D-form or L-form, or may be DL-form which has D-form and L-form in any ratios.

Of them, preferred in the present invention are mannitol, galactitol, xylitol, and sorbitol, more preferred are xylitol and sorbitol, and still more preferred is sorbitol.

In the rubber composition of the present invention, the content of the linear polyhydric alcohol (B) is preferably 1 to 6 parts by mass, more preferably 1.5 to 5.5 parts by mass, still more preferably 2 to 4.5 parts by mass, and even more preferably 2.5 to 4.0 parts by mass per 100 parts by mass of the rubber component (A) from the viewpoint of obtaining a crosslinked rubber composition having excellent elongation fatigue resistance.

<Silica (C)>

The rubber composition of the present invention comprises more than 0 parts by mass and less than 10 parts by mass of the silica (C) per 100 parts by mass of the rubber component (A). By setting the content of the silica (C) to less than 10 parts by mass per 100 parts by mass of the rubber component (A) in the rubber composition, a crosslinked rubber composition having an excellent balance between high elasticity and fatigue resistance can be obtained.

In the present invention, the content of the silica (C) per 100 parts by mass of the rubber component (A) is preferably 0.5 parts by mass or more, more preferably 1 part by mass, and still more preferably 2 parts by mass or more, and preferably 8 parts by mass or less, more preferably 6 parts by mass or less, and still more preferably 2.9 parts by mass or less from the viewpoint of achieving both high elasticity and elongation fatigue resistance.

Examples of the silica (C), which are not particularly limited, include wet silica (hydrated silica), dry silica (anhydrous silica), calcium silicate, and aluminum silicate. Of these, wet silica is preferred. These may be used singly or in combinations of two or more.

Examples of commercially available products which may be used as the silica (C) include Tosoh Silica Corporation's trade names "NIPSIL AQ" (BET specific surface area = 205 $m^2$/g) and "NIPSIL KQ" and Degussa's trade name "ULTRASIL VN3" (BET specific surface area = 175 $m^2$/g).

In the rubber composition of the present invention, when the content of the linear polyhydric alcohol (B) is $W_B$ and the content of the silica (C) is $W_c$ per 100 parts by mass of the rubber component (A), the content of silica (C) with respect to the content of the linear polyhydric alcohol (B) ($W_c/W_B$) is preferably 0 to 3, more preferably 0.5 to 2, and still more preferably 1 to 1.5 from the viewpoint of further improving elongation fatigue resistance.

[Carbon Black (D)]

The rubber composition of the present invention preferably comprises a carbon black (D) as another component from the viewpoint of improving the reinforcing property.

There is no particular limitation on the carbon black, and examples thereof include HAF, IISAF, ISAF, and SAF.

The nitrogen adsorption specific surface area (measured according to $N_2SA$, JIS K 6217-2:2001) of the carbon black is preferably 70 to 180 $m^2$/g, and more preferably 80 to 180 $m^2$/g. Further, the DBP oil absorption amount (measured according to JIS K 6217-4:2008) is preferably 70 to 160 cm3/100 g, and more preferably 90 to 160 $cm^3$/100 g. By using the carbon black, effects of improvement in fracture characteristics, wear resistance, or the like are increased. N339, IISAF, ISAF, and SAF, which are excellent in wear resistance, are particularly preferable.

The carbon blacks may be used singly or in combinations of two or more.

In the rubber composition of the present invention, the content of the carbon black (D) per 100 parts by mass of the rubber component (A) is preferably 10 to 80 parts by mass, more preferably 20 to 70 parts by mass, and still more preferably 30 to 60 parts by mass.

It is preferable for the content of the carbon black (D) to be in the above-mentioned range because a rubber composition and a crosslinked rubber composition having excellent wear resistance can be obtained.

<Other Components>

The rubber composition of the present invention may comprise other components in addition to the components described above. The other components are not particularly limited, and additives usually used in the rubber industry, for example, fillers such as carbon black described above and aluminum hydroxide, softeners, antioxidants, vulcanization accelerators (e.g., thiazole vulcanization accelerator, thiuram vulcanization accelerator, guanidine vulcanization accelerator, sulfenamide vulcanization accelerator), vulcanizing agents (e.g., sulfur), vulcanization acceleration aids (e.g.,

zinc oxide and fatty acids such as stearic acid), vulcanization retarders, silane coupling agents, resins, and oils may be appropriately selected and mixed within a range that does not impair the objects of the present invention.

[Silane Coupling Agent]

The rubber composition of the present invention may comprise a silane coupling agent.

Examples of the silane coupling agents include bis(3-triethoxysilylpropyl)tetrasulfide, bis(3-triethoxysilylpropyl)trisulfide, bis(3-triethoxysilylpropyl)disulfide, bis(2-triethoxysilylethyl)tetrasulfide, bis(3-trimethoxysilylpropyl)tetrasulfide, bis(2-trimethoxysilylethyl)tetrasulfide, 3-mercaptopropyltrimethoxysilane, 3-mercaptopropyltriethoxysilane, 2-mercaptoethyltrimethoxysilane, 2-mercaptoethyltriethoxysilane, 3-trimethoxysilylpropyl-N,N-dimethylthiocarbamoyl tetrasulfide, 3-triethoxysilylpropyl-N,N-dimethylthiocarbamoyl tetrasulfide, 2-triethoxysilylethyl-N,N-dimethylthiocarbamoyl tetrasulfide, 3-trimethoxysilylpropylbenzothiazolyl tetrasulfide, 3-triethoxysilylpropylbenzolyl tetrasulfide, 3-triethoxysilylpropyl methacrylate monosulfide, 3-trimethoxysilylpropyl methacrylate monosulfide, bis(3-diethoxymethylsilylpropyl)tetrasulfide, 3-mercaptopropyldimethoxymethylsilane, dimethoxymethylsilylpropyl-N,N-dimethylthiocarbamoyl tetrasulfide, and dimethoxymethylsilylpropylbenzothiazolyl tetrasulfide. Among these, bis(3-triethoxysilylpropyl)polysulfide and 3-trimethoxysilylpropylbenzothiazolyl tetrasulfide are preferable from the viewpoint of reinforcing effect and the like.

These silane coupling agents may be used singly or in combinations of two or more.

In the present invention, the content of the silane coupling agent in the rubber composition is preferably 3 parts by mass or less, more preferably 1 part by mass or less, and still more preferably 0.3 parts by mass or less per 100 parts by mass of the rubber component (A). Even more preferably, the rubber composition of the present invention does not comprise the silane coupling agent.

In the present invention, when silica is added to the rubber composition, crack resistance and high elasticity are brought about. However, generally, when silane coupling agent is not added, there occurs a problem in elongation fatigue. In the present invention, a rubber composition having excellent elongation fatigue resistance can be obtained by using the linear polyhydric alcohol (B) and the silica (C) in combination.

Therefore, by using the linear polyhydric alcohol (B) and the silica (C) in combination, it is possible to obtain a crosslinked rubber composition having high elasticity and excellent elongation fatigue resistance without using the silane coupling agent or using a small amount thereof.

<Preparation of Rubber Composition>

The rubber composition of the present invention may be prepared by mixing and kneading the above components using a kneader such as a Banbury mixer, a roll, or an internal mixer.

Here, the mixing amounts of the rubber component (A), the linear polyhydric alcohol (B), the silica (C) and the like are the same as the amounts already described as the contents in the rubber component.

The respective components may be kneaded in one step, or two or more divided steps. For example, there is a method in which the rubber component (A), the linear polyhydric alcohol (B), the silica (C) and other ingredients other than the vulcanizing agent and vulcanization accelerator are kneaded in the first step, and the vulcanizing agent and vulcanization accelerator are kneaded in the second step.

The maximum temperature of the first step of kneading is preferably from 140 to 170°C and the maximum temperature of the second step is preferably from 90 to 120°C.

[Crosslinked Rubber Composition]

The crosslinked rubber composition of the present invention is obtained by crosslinking the rubber composition of the present invention described above.

The crosslinking method of the rubber composition is not particularly limited, and a known crosslinking method may be applied. For example, the crosslinking may be performed by molding an unvulcanized rubber composition and then subjecting the same to crosslinking, or by performing a step of preliminary crosslinking to obtain a semi-crosslinked rubber from a non-crosslinked rubber composition, and molding the same and then subjecting the semi-vulcanized rubber to main vulcanization.

[Rubber Products and Tires]

The rubber composition and the crosslinked rubber composition of the present invention are used for various rubber products and are suitable as tread members of tires, and particularly suitable as tread members of pneumatic tires. Examples of the infill gas of the pneumatic tires include ordinary air or air having a controlled oxygen partial pressure, and inert gases such as nitrogen, argon, and helium.

In a case where the rubber composition or the crosslinked rubber composition of the present invention is used for a tire, the rubber composition is not limited to the tread member of tire and may be used for, base tread, side wall, side-reinforcing rubber, bead filler, etc.

In addition, for other uses than tires, the rubber composition of the present invention is usable as vibration isolation rubber, seismic isolation rubber, belt (conveyor belt), rubber roller, various hoses, moran, etc.

Examples

The present invention will be described in more detail with reference to Examples given below, but the present invention is not whatsoever restricted by the following Examples.

[Mixing Components of Rubber Composition]

The components to be mixed in the rubber composition of Examples and Comparative Examples are mentioned below.

<Rubber Component (A)>

> NR: Natural rubber, TSR20
> BR: Polybutadiene rubber, manufactured by JSR Corporation, trade name "BR01"

<Linear Polyhydric Alcohol (B)>

> Linear polyhydric alcohol A: Sorbitol (manufactured by Kanto Chemical Co., Ltd., number of hydroxyl groups 6, number of hydroxyl groups/number of carbon atoms = 1)
> Linear polyhydric alcohol B: Xylitol (manufactured by Wako Pure Chemical Industries, Ltd., number of hydroxyl groups 5, number of hydroxyl groups/number of carbon atoms = 1)
> Cyclic polyhydric alcohol C: Glucose (manufactured by Wako Pure Chemical Industries, Ltd., number of hydroxyl groups 5, number of hydroxyl groups/number of carbon atoms = 0.83)

<Silica (C)>

Silica: NIPSIL AQ, manufactured by Tosoh Silica Corporation

<Carbon Black (D)>

Carbon black: SAF (ASAHI #105, manufactured by Asahi Carbon Co., Ltd.)

<Others>

Vulcanization accelerator CZ: N-Cyclohexyl-2-benzothiazolylsulfenamide (Nocceler CZ, manufactured by Ouchi Shinko Chemical Industrial Co., Ltd.)

[Evaluation]

Evaluation in the following Examples and Comparative Examples was carried out as follows.

(1) Elongation fatigue resistance test

For each sample of Examples and Comparative Examples, according to JIS K 6270:2001, a test was carried out with a dumbbell-shaped test piece at a test strain of 100%, a test frequency of 5 Hz, a test temperature of 80°C and the repetition number until broken was measured.

In the evaluation, the results were shown as being indexed taking the number until broken in Comparative Example 1 as 100. The larger the value, the more times it took to break and the better the elongation fatigue resistance.

The evaluation results are shown in Table 1.

(2) 10%G'

In the dynamic viscoelasticity test using ARES (manufactured by TA Instruments), the test was conducted at a test frequency of 15 Hz and a test temperature of 50°C, and the dynamic shear storage modulus with a dynamic strain of 10% (10%G') was measured and shown as an index value when 10%G' of Comparative Example 1 was taken as 100. The larger the value, the higher the elasticity. The evaluation results are shown in Table 1.

The balance between high elasticity and elongation fatigue resistance can be evaluated by the total value of the index values of both elongation fatigue resistance and elasticity (10%G'). The larger the total value, the better the balance. It is preferable that the index values of both high elasticity and elongation fatigue resistance be 100 or more.

(Examples 1 to 5 and Comparative Examples 1 to 6)

According to the mixing formulation shown in Table 1 and using a Banbury mixer, the above-mentioned mixing components for rubber composition were kneaded to prepare samples of rubber compositions. In the final stage of kneading, sulfur serving as the vulcanizing agent, and the vulcanization accelerator were added.

The obtained rubber composition was vulcanized at 145°C for 33 minutes to prepare a crosslinked(vulcanized) rubber composition, and using the crosslinked rubber composition, the elongation fatigue resistance were evaluated. The samples were evaluated based on the evaluation of Comparative Example 1 as 100.

Table 1

| | | Example | | | | | Comparative Example | | | | | |
|---|---|---|---|---|---|---|---|---|---|---|---|---|
| | | 1 | 2 | 3 | 4 | 5 | 1 | 2 | 3 | 4 | 5 | 6 |
| (A) | NR | 100.0 | 100.0 | 100.0 | 100.0 | 100.0 | 100.0 | 100.0 | 100.0 | 100.0 | 100.0 | 100.0 |
| (B) | Linear polyhydric alcohol A | 3.0 | 3.0 | 3.0 | 3.0 | | | | | | 3.0 | |
| (B) | Linear polyhydric alcohol B | | | | | 3.0 | | | | | | |
| (B) | Cyclic polyhydric alcohol C | | | | | | | | | | | 3.0 |
| (C) | Silica | 0.5 | 2.9 | 3.5 | 6.0 | 2.9 | | 2.9 | 6.0 | 10.0 | 10.0 | 2.9 |
| (D) | Carbon black | 40.0 | 40.0 | 40.0 | 40.0 | 40.0 | 40.0 | 40.0 | 40.0 | 40.0 | 40.0 | 40.0 |
| Others | Vulcanization accelerator CZ | 1.0 | 1.0 | 1.0 | 1.0 | 1.0 | 1.0 | 1.0 | 1.0 | 1.0 | 1.0 | 1.0 |
| | Sulfur | 1.5 | 1.5 | 1.5 | 1.5 | 1.5 | 1.5 | 1.5 | 1.5 | 1.5 | 1.5 | 1.5 |
| Evaluation | 10%G' | 111 | 108 | 111 | 119 | 110 | 100 | 109 | 116 | 130 | 129 | 97 |
| | Elongation fatigue resistance | 100 | 127 | 111 | 104 | 123 | 100 | 98 | 94 | 88 | 99 | 101 |

(Example 6 and Comparative Example 7)

According to the mixing formulation shown in Table 2 and using a Banbury mixer, the above-mentioned mixing components for rubber composition were kneaded to prepare samples of rubber compositions. In the final stage of kneading, sulfur serving as the vulcanizing agent, and the vulcanization accelerator were added.

The obtained rubber composition was vulcanized at 145°C for 33 minutes to prepare a crosslinked(vulcanized) rubber composition, and using the crosslinked rubber composition, the elongation fatigue resistance were evaluated. The samples were evaluated based on the evaluation of Comparative Example 7 as 100.

Table 2

|  |  |  | Example | Comparative Example |
| --- | --- | --- | --- | --- |
|  |  |  | 6 | 7 |
| (A) |  | NR | 80.0 | 80.0 |
| (A) |  | Polybutadiene | 20.0 | 20.0 |
| (B) |  | Linear polyhydric alcohol A | 1.5 |  |
| (C) |  | Silica | 2.5 | 2.5 |
| (D) |  | Carbon black | 40.0 | 40.0 |
| Others |  | Vulcanization accelerator CZ | 1.0 | 1.0 |
|  |  | Sulfur | 1.5 | 1.5 |
| Evaluation |  | 10%G' | 100 | 100 |
|  |  | Elongation fatigue resistance | 108 | 100 |

Industrial Applicability

According to the present invention, a rubber composition from which a crosslinked rubber composition having high elasticity and excellent elongation fatigue resistance can be obtained can be provided. Furthermore, according to the present invention, a rubber product such as a tire having high elasticity and excellent elongation fatigue resistance can be provided.

**Claims**

1.   A rubber composition comprising:

a rubber component (A);
a linear polyhydric alcohol (B); and
a silica (C),
wherein a total content of a natural rubber and a synthetic polyisoprene rubber in the rubber component (A) is 30% by mass or more, and
a content of the silica (C) is more than 0 parts by mass and less than 10 parts by mass per 100 parts by mass of the rubber component (A).

2.   The rubber composition according to claim 1,
wherein the number of hydroxyl groups that the linear polyhydric alcohol (B) has per molecule is more than a half of the number of carbon atoms per molecule.

3.   The rubber composition according to claim 1 or 2,
wherein the linear polyhydric alcohol (B) has a melting point of 170°C or less.

4.   The rubber composition according to any one of claims 1 to 3,
wherein the linear polyhydric alcohol (B) has a molecular weight of 200 or less.

5. The rubber composition according to any one of claims 1 to 4,
wherein a content of the linear polyhydric alcohol (B) is 1 to 6 parts by mass per 100 parts by mass of the rubber component (A).

6. The rubber composition according to any one of claims 1 to 5,
wherein a content of the silica (C) is 1 to 5 parts by mass per 100 parts by mass of the rubber component (A).

7. The rubber composition according to any one of claims 1 to 6, further comprising:

   a carbon black (D),
   wherein a content of the carbon black (D) is 10 to 80 parts by mass per 100 parts by mass of the rubber component (A).

8. The rubber composition according to any one of claims 1 to 7,
wherein a content of a silane coupling agent is 1 part by mass or less per 100 parts by mass of the rubber component (A).

9. The rubber composition according to any one of claims 1 to 7 not comprising a silane coupling agent.

10. The rubber composition according to any one of claims 1 to 9,
wherein a total content of the natural rubber and the synthetic polyisoprene rubber in the rubber component (A) is 50% by mass or more.

11. The rubber composition according to any one of claims 1 to 10, which is for tire treads.

12. A tire using the rubber composition of any one of claims 1 to 11.

**EP 3 636 708 A1**

<table>
<tr><td colspan="2" align="center">INTERNATIONAL SEARCH REPORT</td><td>International application No.<br><br>PCT/JP2018/020395</td></tr>
</table>

A. CLASSIFICATION OF SUBJECT MATTER

Int.Cl. C08L21/00(2006.01)i, B60C1/00(2006.01)i, C08K3/04(2006.01)i, C08K3/36(2006.01)i, C08K5/053(2006.01)i, C08K5/5415(2006.01)i, C08L7/00(2006.01)i, C08L9/00(2006.01)i

According to International Patent Classification (IPC) or to both national classification and IPC

B. FIELDS SEARCHED

Minimum documentation searched (classification system followed by classification symbols)

Int.Cl. C08L21/00, B60C1/00, C08K3/04, C08K3/36, C08K5/053, C08K5/5415, C08L7/00, C08L9/00

Documentation searched other than minimum documentation to the extent that such documents are included in the fields searched

| | |
|---|---|
| Published examined utility model applications of Japan | 1922–1996 |
| Published unexamined utility model applications of Japan | 1971–2018 |
| Registered utility model specifications of Japan | 1996–2018 |
| Published registered utility model applications of Japan | 1994–2018 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| Y | JP 2013-213129 A (THE YOKOHAMA RUBBER CO., LTD.) 17 October 2013, claims 1-5, paragraph [0024], example 1 (Family: none) | 1-12 |
| Y | JP 2006-124602 A (THE YOKOHAMA RUBBER CO., LTD.) 18 May 2006, claim 1, paragraphs [0010], [0031] (Family: none) | 1-12 |
| A | JP 2013-213125 A (THE YOKOHAMA RUBBER CO., LTD.) 17 October 2013, entire text (Family: none) | 1-12 |
| A | JP 2016-509614 A (BRIDGESTONE CORPORATION) 31 March 2016, entire text & US 2015/0322248 A1, entire text & WO 2014/097220 A1 & EP 2935440 A1 & CN 104884518 A | 1-12 |

☐ Further documents are listed in the continuation of Box C.     ☐ See patent family annex.

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 26 July 2018 (26.07.2018) | 07 August 2018 (07.08.2018) |

| Name and mailing address of the ISA/<br>　　Japan Patent Office<br>　　3-4-3, Kasumigaseki, Chiyoda-ku,<br>　　Tokyo 100-8915, Japan | Authorized officer<br><br>Telephone No. |
|---|---|

Form PCT/ISA/210 (second sheet) (January 2015)

12

**EP 3 636 708 A1**

## REFERENCES CITED IN THE DESCRIPTION

### Patent documents cited in the description

- JP 2014015581 A